# EUROPÄISCHE PATENTSCHRIFT

(11) **EP 1 134 253 B1**
(45) Veröffentlichungstag und Bekanntmachung des Hinweises auf die Patenterteilung: **12.01.2005**
(21) Anmeldenummer: 01104521.8
(22) Anmeldetag: 02.03.2001
(51) Int. Cl.: C08K 5/06, C08L 21/00

(54) **Polyether enthaltende Kautschukmischungen**
Rubber compositions containing polyether
Compositions de caoutchouc contenant un polyéther

(30) Priorität: 15.03.2000 DE 10012407
(43) Veröffentlichungstag der Anmeldung: 19.09.2001
(73) Patentinhaber: BAYER AG, 51368 Leverkusen (DE)
(72) Erfinder: Scholl, Thomas Dr., 51469 Bergisch Gladbach (DE); Weidenhaupt, Hermann-Josef Dr., 50259 Pulheim (DE)

(56) Entgegenhaltungen:
- EP-A- 0 738 755
- EP-A- 0 761 734
- EP-A- 0 947 548

## Beschreibung

Die vorliegende Erfindung betrifft Kautschukmischungen mit verbessertem Verarbeitungsverhalten enthaltend spezielle Polyether sowie die Verwendung der Kautschukmischungen zur Herstellung von Vulkanisaten, insbesondere zur Herstellung von hochverstärkten, abriebbeständigen Formkörpern, besonders bevorzugt zur Herstellung von Reifen, die einen niedrigen Rollwiderstand und einen hohen Abriebwiderstand aufweisen.

Zur Herstellung von Reifen mit verringertem Rollwiderstand sind eine Reihe von Lösungsvorschlägen ausgearbeitet worden. In DE-A-2 255 577 und 4 435 311, EP-A1-0 670 347 sowie US-A-4,709,065 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvulkanisate ist jedoch, dass zur Erreichung einer akzeptablen Verarbeitbarkeit relativ große Mengen der teuren polysulfischen Silane erforderlich sind.

Zur Verbesserung der Verarbeitbarkeit von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100 bis 300 %) vermindern, so dass die verstärkende Wirkung des Füllstoffs Einbuße erleidet.

Darüber hinaus war es bekannt, Polyalkohole und Polyglykole Kautschukmischungen zuzugeben. So werden in EP-A1-0 869 145 und EP-A1-0 738 755 Kautschukmischungen beschrieben, die bestimmte Polyethylenoxide enthalten. Die speziellen Strukturen der erfindungsgemäßen Polyether werden nicht offenbart. Die genannten Polyethylenoxide verbessern gemäss der Lehre der Dokumente die Verarbeitbarkeit der unvulkanisierten Kautschukmischungen kaum sondern wirken sich vor allem auf die Vulkanisateigenschaften, insbesondere auf die antistatischen Eigenschaften und auf das Abriebverhalten, aus.

Aufgabe der vorliegenden Erfindung war es Zusatzstoffe zu finden, die die Fließfähigkeit von Kautschukmischungen verbessern und Vulkanisate mit verbesserten Eigenschaften liefern, insbesondere im Hinblick auf Abrieb, Rollwiderstand und Naßrutschfestigkeit bei Reifen.

Es wurden spezielle Polyether gefunden, die die Fließfähigkeit von Kautschukmischungen überraschend deutlich verbessern und zu Vulkanisaten mit gutem Verstärkungsverhalten, günstiger dynamischer Dämpfung und gutem Abriebverhalten führen.

**Gegenstand der vorliegenden Erfindung sind daher Kautschukmischungen, die dadurch gekennzeichnet sind, dass sie im Bereich von 0,3 bis 15 Gew.-Teilen eine Additions- und Polyadditionsverbindung von 0,7 bis 7 mol Ethylenoxid und/oder** Propylenoxid pro mol Hydroxylgruppe an Neopentylglykol und/oder Trimethylolpropan, bezogen auf 100 Gew. Teile der Gesamtmenge an eingesetzten **Kautschuken, enthalten.**

**Die erfindungsgemäßen Kautschukmischungen enthalten 1 bis 500 Gew.-Teile Füllstoff sowie gegebenenfalls weitere Kautschukhilfsmittel und/oder Vernetzer.**

Bevorzugt sind die entsprechenden Additions- und Polyadditionsprodukte von im Bereich von 0,7 bis 3 mol Ethylenoxid und/oder Propylenoxid pro mol Hydroxylgruppe des Trimethylolpropans.

Die Herstellung derartiger Additions- und Polyadditionsprodukte ist bekannter Stand der Technik (Houben-Weyl, Methoden der organischen Chemie, Band XIV / 2, Thieme Verlag, Stuttgart, 1963, Seiten 436 - 440, 450). Derartige Polyether sind auch im Handel erhältlich. Geeignete Polyether sind beispielsweise Desmophen® 550 U und Desmophen® 4011 T der Bayer AG. Die Polyethylenoxide und Polypropylenoxide oder deren Mischpolyether werden herstellungsbedingt bevorzugt als Mischungen eingesetzt.

Bevorzugt wird den erfindungsgemäßen Kautschukmischungen eine Menge im Bereich von 1 bis 10 Gew.-Teilen, bezogen auf 100 Gew.-Teile an der Gesamtmenge an eingesetzten Kautschuken, Additions- und Polyadditionsverbindungen zugegeben.

Die zur Herstellung der erfindungsgemäßen Kautschukmischungen einzusetzenden Kautschuke umfassen Naturkautschuk und Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.
- BR -: Polybutadien
- ABR -: Butadien/Acrylsäure-C₁-C₄-alkylester-Copolymere
- CR -: Polychloropren
- IR -: Polyisopren
- SBR -: Styrol/Butadien-Copolymerisate mit Styrolgehalten von im Bereich von 1 - 60, vorzugsweise im Bereich von 20 - 50 Gew.-%
- IIR -: Isobutylen/Isopren-Copolymerisate
- NBR -: Butadien/Acrylnitril-Copolymere mit Acrylnitrilgehalten von im
- Bereich von 5 - 60, vorzugsweise im Bereich von 10 - 40 Gew.-%
- HNBR-: teilhydrierter oder vollständig hydrierter NBR-Kautschuk
- EPDM -: Ethylen/Propylen/Dien-Copolymerisate
sowie Mischungen dieser Kautschuke.

Für die Herstellung von Kraftfahrzeugreifen sind insbesondere Mischungen von Naturkautschuk, Emulsions-SBR- sowie Lösungs-SBR- und Polybutadien Kautschuk von Bedeutung. Von besonderem Interesse ist der Einsatz von Lösungs-SBR-Kautschuken mit einem Vinylgehalt im Bereich von 20-60 Gew.-% sowie von Polybutadienkautschuken mit einem hohen 1,4-cis-Gehalt (> 90 %), der mit Katalysatoren auf Basis von Nickel, Kobalt, Titan und/oder Neodym hergestellt wurde, sowie Polybutadienkautschuk mit einem Vinylgehalt von bis zu 75 % sowie die Mischungen der genannten Lösungs-SBR und Polybutadienkautschuke für den Einsatz in den erfindungsgemäßen Kautschukmischungen. Ganz besonders bevorzugt sind entsprechende Lösungs-SBR und Polybutadienkautschuke mit einem zusätzlichen Gehalt an gebundenen funktionellen Gruppen, insbesondere Hydroxyl- und/oder Carboxylgruppen. Bevorzugte Gehalte an Hydroxyl- und/oder Carboxylgruppen liegen im Bereich von 0,05 bis 3 Gew. %, bezogen auf Kautschuk. Besonders bevorzugte erfindungsgemäße Kautschuke werden z.B. in den deutschen Patentanmeldungen DE-A1-198 32549, DE-A1-198 52 648, DE-A1-199 14 848, DE-A1-199 20 788, DE-A1-199 20 814 sowie DE-A-2.653.144 und EP-A1-0 464 478 beschrieben, welche für die US-Praxis auch als Referenz in die Anmeldung aufgenommen wird.

Die erfindungsgemäßen Kautschukmischungen können im Bereich von 0,1 bis 300 Gew.-Teile an verschiedensten Füllstoffen, bezogen auf 100 Gew.-Teile an der Gesamtmenge an Kautschuk, enthalten. Als Füllstoffe eignen sich vor allem oxidische und/oder silikatische Füllstoffe und/oder Ruße. Bevorzugt sind oxidische und/oder silikatische Füllstoffe.

Besonders bevorzugt sind:
- hochdisperse Kieselsäure, hergestellt z.B. durch Fällung von Lösungen von Silikaten oder Flammenhydrolyse, von Siliciumhalogeniden mit spezifischen Oberflächen im Bereich von 5 - 1000, vorzugsweise im Bereich von 20 - 400 m²/g (BET-Oberfläche) und mit Primärteilchengröße von im Bereich von 10 - 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen.
- Synthetische Silikate, wie Aluminiumsilikat, Erdalkalisilikate, wie Magnesiumsilikat oder Calciumsilikat, mit BET-Oberflächen von im Bereich von 20 - 400 m²/g und Primärteilchendurchmessern von im Bereich von 10 - 400 nm.
- Natürliche Silikate, wie Kaolin und andere natürlich vorkommende Kieselsäuren
- Glasfasern und Glasfaserprodukte (Matten, Stränge) oder Mikroglaskugeln
- Metalloxide, wie Zinkoxid, Calciumoxid, Magnesiumoxid, Aluminiumoxid
- Metallcarbonate, wie Magnesiumcarbonat, Calciumcarbonat, Zinkcarbonat
- Metallhydroxide, wie Aluminiumhydroxid, Magnesiumhydroxid.

Die erwähnten Füllstoffe werden bevorzugt in Mengen im Bereich von im Bereich von 5 bis 200 Gew.-Teilen, insbesondere in Mengen im Bereich von 10 bis 150 Gew.-Teilen, bezogen auf 100 Gew.-Teile an eingesetzten Kautschuken, eingesetzt.

Wie erwähnt, eignen sich auch Ruße als Füllstoffe. Sie werden nach dem Flammruß, Furnace- oder Gasrußverfahren hergestellt und besitzen im allgemeinen BET-Oberflächen von 20 bis 200 m²/g, wie z.B. SAF-, ISAF-, HAF-, FEF- oder GPF-Ruße.

In einer besonders bevorzugten Ausführungsform bestehen die erfindungsgemäßen Kautschukmischungen neben mindestens einem Kautschuk aus im Bereich von 1 bis 10 Gew.-Teilen Polyhydroxylverbindung (I), im Bereich von 10 bis 100 Gew.-Teilen an oxidischen oder silikatischen Füllstoff und im Bereich von 5 bis 50 Gew.-Teilen an Ruß, jeweils bezogen auf 100 Gew.-Teile an eingesetzten Kautschuken.

Zur Herstellung von Kautschukvulkanisaten können die bekannten und dafür üblichen Kautschukhilfsprodukte den erfindungsgemäßen Kautschukmischungen zugegeben werden, insbesondere Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide, Vernetzer sowie Aktivatoren. In diesem Zusammenhang verweisen wir auf I. Franta, Elastomers and Rubber Compounding Materials, Elsevier 1989, S. 325-494.

Die Kautschukhilfsmittel werden in üblichen Mengen, die sich unter anderem nach dem Verwendungszweck richten, eingesetzt. Übliche Mengen sind z.B. Mengen im Bereich von 0,1 - 50 Gew.-%, bezogen auf die Gesamtmenge an eingesetzten Kautschuken.

Darüber hinaus können bei der Herstellung von Kautschukvulkanisaten noch die bekannten Vernetzer wie Schwefel, Schwefelspender oder Peroxide eingesetzt werden. Außerdem können selbstverständlich noch Vulkanisationsbeschleuniger wie Mercaptobenzthiazole, Guanidine, Thiurame, Dithiocarbamate, Thioharnstoffe und/oder Thiocarbonate den erfindungsgemäßen Kautschukmischungen zugegeben werden. Die Vulkanisationsbeschleuniger und Vernetzer werden in Mengen von im Bereich von 0,1 - 10 Gew.-%, bevorzugt im Bereich von 0,1 bis 5 Gew.-%, bezogen auf die Gesamtmenge an eingesetzten Kautschuken, eingesetzt.

In einer besonders bevorzugten Ausführungsform enthalten die erfindungsgemäßen Kautschukmischungen neben den erwähnten Kautschuken, den Füllstoffen, der Polyether (I), den Kautschukhilfsmitteln und Vernetzern noch im Bereich von 0,2 bis 4 Gew.-Teile an Zinksalzen aliphatischer, cycloaliphatischer und/oder aromatischer C₆-C₃₆-Carbonsäuren, z.B. Zinksalze der Talgfettsäure, der Ölsäure oder Benzoesäure. Darüber hinaus werden in der besonders bevorzugten Ausführungsform noch im Bereich von 0,5 bis 15 Gew.-Teile, bezogen auf 100 Gew.-Teile an eingesetzten Kautschuken, schwefelhaltige Silylether als Füllstoffaktivatoren zugesetzt, insbesondere Bis-(trialkoxisilyl-alkyl)-polysulfide, wie in DE-A-2 141 159 und DE-A-2 255 577 beschrieben, oligomere und/oder polymere schwefelhaltige Silylether, wie in DE-A-4 425 311 und EP-A1-0 670 347 beschrieben sowie Mercaptoalkyltrialkoxisilane, Mercaptopropyltriethoxisilan und/oder Thiocyanatoalkylsilylether, wie in DE-A-195 44 469 beschrieben.

Die erfindungsgemäßen Kautschukmischungen können in den üblichen Appaturen hergestellt werden, wie Mischaggregaten, insbesondere Walzen, Innenmischern und Mischextrudern.

Die Vulkanisation der erfindungsgemäßen Kautschukmischungen kann üblicherweise bei Temperaturen im Bereich von 100 bis 200°C, bevorzugt im Bereich von 130 bis 180°C, gegebenenfalls bei Drücken im Bereich von 10 bis 200 bar, erfolgen.

Die erfindungsgemäßen Polyether (I) enthaltenden Kautschukmischungen zeichnen sich insbesondere durch eine besonders gute Fließfähigkeit, hohe Verarbeitungssicherheit, sowie verbesserter Vulkanisationskinetik aus und liefern Vulkanisate mit höheren Spannungswerten. Sie eignen sich daher insbesondere zur kostengünstigen Herstellung von hochverstärkten, abriebbeständigen Formkörpern.

Als Formkörpem werden insbesondere genannt: Kabelmäntel, Schläuche, Treibriemen, Förderbänder, Walzenbeläge, Reifen, Schuhsohlen, Dichtungsringe und Dämpfungselemente. Ganz besonders bevorzugt ist die Verwendung der erfindungsgemäßen Kautschukmischungen für die Herstellung von rollwiderstandsarmen Reifenlaufflächen.

### Beispiele

Die Polyether lassen sich aus den entsprechenden Alkoholen, bzw. Phenolen gemäss Houben-Weyl, Methoden der organischen Chemie, Band XIV / 2, Thieme Verlag, Stuttgart, 1963, Seiten 436 - 440, 450 herstellen. Die angegebenen Mengen beziehen sich auf Gewichtsteile. Die Mooney-Messungen erfolgten nach DIN 53 523.

### Beispiel 1

In einem 300 ml Innenmischer (35 UpM, Starttemperatur 120° C, 5 Minuten Mischzeit) wurden die nachfolgenden Kautschukmischungen hergestellt. Mit den verschiedenen Polyethern des Stands der Technik wurden als erfindungsgemäße Polyether Addukte von Trimethylolpropan und Ethylenoxid (1,3, 2,5 und 4 mol Ethylenoxid pro Hydroxylgruppen-Äquivalent) sowie Trimethylolpropan und Propylenoxid (1 mol Propylenoxid pro Hydroxylgruppen-Äquivalent) verglichen.

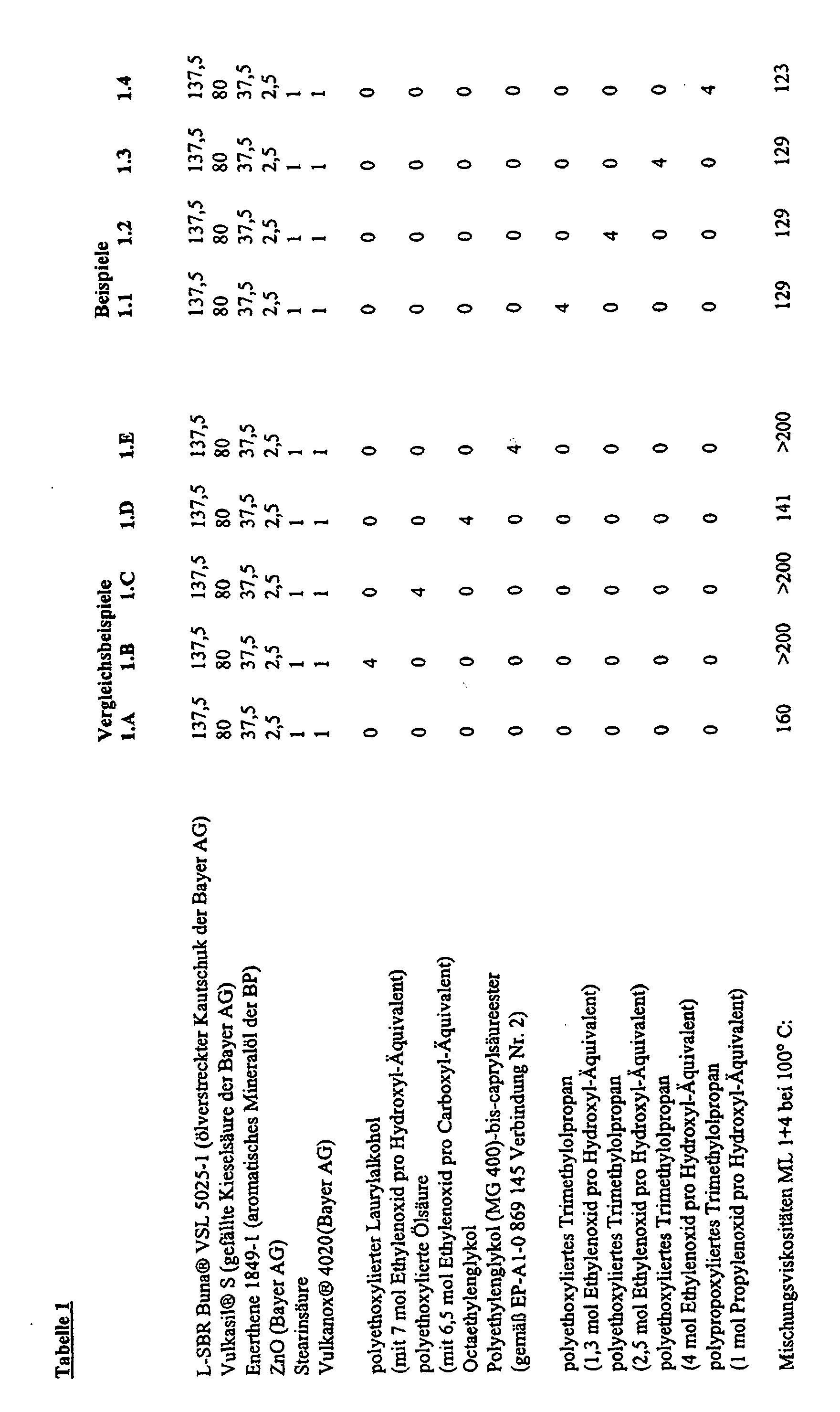

### Beispiel 2

In einem 300 ml Innenmischer (55 UpM, Starttemperatur 100°C, 7 Minuten Mischzeit, Endtemperatur 130°C) wurden die nachfolgenden Kautschukmischungen hergestellt. Der verwendete Hydroxyl-L-SBR wurde entsprechend EP-A1-0 974 616 durch Umsetzung von 100 Gew. Teilen Lösungs-SBR Buna® VSL 5020-0 mit 2 Gew. Teilen Mercaptoethanol sowie 0,233 Gew. Teilen Dilauroylperoxid bei 80°C in Cyclohexan erhalten und mit 37,5 Gew. Teilen aromatischem Mineralöl Mobilsol K (der Fa. Mobil Oil) verstreckt. Die Mischungszusammensetzung und Ergebnisse gibt folgende Tabelle 2 wieder:

**Tabelle 2**

| | **Vergleichsbeispiele** | | | | **Beispiele** | |
|---|---|---|---|---|---|---|
| | **2.A** | **2.B** | **2.C** | **2.D** | **2.1** | **2.2** |
| Hydroxyl-L-SBR (0,4 % OH,, 37,5 phr Ölgehalt) | 54 | 54 | 54 | 54 | 54 | 54 |
| Buna® CB 24 | 45 | 45 | 45 | 45 | 45 | 45 |
| Naturkautschuk TSR 5^{*} | 10 | 10 | 10 | 10 | 10 | 10 |
| Vulkasil® S | 70 | 70 | 70 | 70 | 70 | 70 |
| Enerthene 1849-1 | 28,5 | 28,5 | 28,5 | 28,5 | 28,5 | 28,5 |
| ZnO | 2,5 | 2,5 | 2,5 | 2,5 | 2,5 | 2,5 |
| Stearinsäure | 1 | 1 | 1 | 1 | 1 | 1 |
| Vulkanox® 4020 (Bayer AG) | 1,5 | 1,5 | 1,5 | 1,5 | 1,5 | 1,5 |
| Silan Si 69 (Degussa AG) | 5,6 | 5,6 | 5,6 | 5,6 | 5,6 | 5,6 |

| | | | | | | |
|---|---|---|---|---|---|---|
| *z.B. von Fa. Weber & Schaer, 20095 Hamburg erhältlich | | | | | | |

Anschließend wurden auf einer Kautschukwalze (50° C) folgende Verbindungen zugemischt:

| | | | | | | |
|---|---|---|---|---|---|---|
| ohne Zusatz | 0 | 0 | 0 | 0 | 0 | 0 |
| polyethoxylierter Laurylalkohol | | | | | | |
| (7 mol Ethylexoxid / OH) | 0 | 4 | 0 | 0 | 0 | 0 |
| polyethoxylierters Nonylphenol | | | | | | |
| (12 mol Ethylexoxid / OH) | 0 | 0 | 4 | 0 | 0 | 0 |
| polyethoxylierte Ölsäure | | | | | | |
| (6,5 mol Ethylenoxid / COOH) | 0 | 0 | 0 | 4 | 0 | 0 |
| ethoxyliertes Trimethylolpropan | | | | | | |
| (2,4 mol Ethylenoxid / OH) | 0 | 0 | 0 | 0 | 4 | 0 |
| propoxyliertes Trimethylolpropan | | | | | | |
| (1 mol Propylenoxid / OH) | 0 | 0 | 0 | 0 | 0 | 4 |

Die resultierenden Kautschukmischungen wiesen folgende Viskositäten auf:

| | | | | | | |
|---|---|---|---|---|---|---|
| ML 1+4(100°C) | 118 | 111 | 115 | 117 | 94 | 100 |

Die ermittelten Mischungsviskositäten zeigen, dass die üblichen Polyethylenoxid-Polyether praktisch keine viskositätssenkende Wirkung besitzen und dass die erfindungsgemäßen Polyether hier eine Sonderstellung besitzen und erheblich wirksamere Fließhilfsmittel sind.

### Beispiel 3

In einem 1,5 l Innenmischer (70 UpM, Starttemperatur 80°C, 5 Minuten Mischzeit, Endtemperatur 140°C) wurden die nachfolgenden Kautschukmischungen hergestellt. Der verwendete Hydroxyl-L-SBR wurde entsprechend EP-A1-0 974 616 durch Umsetzung von 100 Gew. Teilen Lösungs-SBR Buna® VSL 5020-0 mit 1,15 Gew. Teilen Mercaptoethanol sowie 0,15 phr Trigonox 29-C50 (50 %ige Lösung von 1,1-Di-(tert.-butylperoxi)-3,3,5-trimethylcyclohexan in Kohlenwasserstoff, Hersteller: Akzo Nobel Chemicals GmbH) bei 110°C erhalten und mit 21 phr aromatischem Mineralöl Mobilsol K (der Fa. Mobil Oil) verstreckt. Die Mischungszusammensetzung und Ergebnisse gibt folgende Tabelle 3 wieder.

Als Vergleichspolyether dienten ein Polypropylenglykolpolyether mit Molgewicht 1.000 (Vergleichspolyether B) und ein polyfunktioneller, auf Sorbit gestarteter Polypropylenglykol/ethylenglykol-Polyether mit Molgewicht 12.000 und PPG zu PEG Gewichtsverhältnis 87:13 (Vergleichspolyether C):

**Tabelle 3**

| | **Vergleichsbeispiele** | | | **Beispiel** |
|---|---|---|---|---|
| | **3.A** | **3.B** | **3.C** | **3.1** |
| Hydroxyl-L-SBR (0,25 % OH, 21 phr Ölgehalt) | 91 | 91 | 91 | 91 |
| Buna® CB 25 (Bayer AG) | 30 | 30 | 30 | 30 |
| Mineralöl Enerthene 1849-1 (BP) | 16,5 | 16,5 | 16,5 | 16,5 |
| Kieselsäure Vulkasil S (Bayer AG) | 80 | 80 | 80 | 80 |
| ZnO | 2,5 | 2,5 | 2,5 | 2,5 |
| Silan Si 69 (Degussa Hüls AG) | 6,4 | 6,4 | 6,4 | 6,4 |
| Wachs Antilux 654 (Rheinchemie) | 1,5 | 1,5 | 1,5 | 1,5 |
| Stearinsäure | 1 | 1 | 1 | 1 |
| Vulkanox® 4020 (Bayer AG) | 1 | 1 | 1 | 1 |
| Vergleichspolyether B | 0 | 8 | 0 | 0 |
| Vergleichspolyether C | 0 | 0 | 8 | 0 |
| erfindungsgemäßer Polyether (ethoxiliertes Trimethylolpropan, MG 310) | 0 | 0 | 0 | 8 |
| Beschleuniger Vulkacit CZ (Bayer AG) | 1,8 | 1,8 | 1,8 | 1,8 |
| Beschleuniger Vulkacit D (Bayer AG) | 2 | 2 | 2 | 2 |
| Schwefel | 1,5 | 1,5 | 1,5 | 1,5 |
| Mischungsviskosität ML 1+4 (100°C) | 100 | 117 | 126 | 88 |

### Extrusionsverhalten:

Die Kautschukmischungen wurden bei 90°C durch eine flache trapezförmige Düse (4 mm maximale Höhe und 50 mm breit) bei 1,4 ccm/sec Durchsatz extrudiert. Die Extrudate sahen wie folgt aus:

| | |
|---|---|
| Vergleichsbeispiele 3.A, 3.B und 3.C | zackige Kanten, rauhe, unregelmäßig gewölbte Oberfläche |
| erfindungsgemäßes Beispiel 3.1 | glatte Kanten, gleichmäßige glatte Oberfläche |

Die Kautschukmischungen wurden bei 170°C 20 Minuten vulkanisiert. Es ergaben sich folgende Vulkanisateigenschaften:

**Tabelle 3**

| (Fortsetzung) | **Vergleichsbeispiele** | | | **Beispiel** |
|---|---|---|---|---|
| | **3.A** | **3.B** | **3.C** | **3.1** |
| Zugfestigkeit (MPa) | 17,6 | 16 | 16,3 | 19,9 |
| Bruchdehnung (%) | 365 | 440 | 425 | 455 |
| Spannungswert bei 300 % Dehnung (MPa) | 13,3 | 9,4 | 10,4 | 11,5 |
| Härte bei 23°C (Shore A) | 66 | 66 | 68 | 69 |
| Rückprallelastizität bei 70°C (%) | 57 | 57 | 56 | 58 |

## Patentansprüche

1. Kautschukmischungen, **dadurch gekennzeichnet, dass** sie im Bereich von 0,3 bis 15 Gew.-Teilen eine Additions- und Polyadditionsverbindung von 0,7 bis 7 mol Ethylenoxid und/oder Propylenoxid pro mol Hydroxylgruppe an Neopentylglykol und/oder Trimethylolpropan, bezogen auf 100 Gew. Teile der Gesamtmenge an eingesetzten Kautschuken, enthalten.

2. Kautschukmischungen nach Anspruch 1, **dadurch gekennzeichnet, dass** sie 1 bis 500 Gew.-Teile Füllstoff sowie gegebenenfalls weitere Kautschukhilfsmittel und/oder Vemetzer enthalten.

3. Kautschukmischungen nach Anspruch 1, **dadurch gekennzeichnet, dass** sie im Bereich von 0,1 bis 300 Gew.-Teile an anorganischen und/oder organischen Füllstoffen, bezogen auf 100 Gew.-Teile an eingesetzten Kautschuken, enthalten.

4. Kautschukmischungen nach Anspruch 1 und/oder Anspruch 3, **dadurch gekennzeichnet, dass** die Füllstoffe ausgewählt werden aus der Gruppe oxidische, silikatische Füllstoffe und Ruße oder deren Mischungen.

5. Kautschukmischungen nach Anspruch 3, **dadurch gekennzeichnet, dass** als Füllstoff eine oder mehrere gefällte Kieselsäuren und/oder gefällte Silikate mit einer spezifischen Oberfläche von 20 bis 400 m²/g oder aber eine Mischung enthaltend diese eingesetzt wird.

6. Verwendung der Kautschukmischungen nach Anspruch 1 zur Herstellung von Vulkanisaten.

7. Verwendung der Kautschukmischungen nach Anspruch 1 zur Herstellung von Reifen, insbesondere Reifenlaufflächen.

## Claims

1. Rubber mixtures, **characterised in that** they contain in the range 0.3 to 15 parts by wt. of an addition and polyaddition compound of 0.7 to 7 moles of ethylene oxide and/or propylene oxide per mole of hydroxyl groups in neopentyl glycol and/or trimethylolpropane, with respect to 100 parts by wt. of the total amount of rubbers used.

2. Rubber mixtures according to Claim 1, **characterised in that** they contain 1 to 500 parts by wt. of filler and optionally other rubber auxiliary substances and/or cross-linking agents.

3. Rubber mixtures according to Claim 1, **characterised in that** they contain in the range 0.1 to 300 parts by wt. of inorganic and/or organic fillers, with respect to 100 parts by wt. of rubber used.

4. Rubber mixtures according to Claim 1 and/or Claim 3, **characterised in that** the fillers are chosen from the group oxidic or siliceous fillers and carbon black or mixtures of these.

5. Rubber mixtures according to Claim 3, **characterised in that** one or more precipitated silicas and/or precipitated silicates with a specific surface area of 20 to 400 m²/g or else a mixture containing these is used as a filler.

6. Use of the rubber mixtures according to Claim 1 to prepare vulcanisates.

7. Use of the rubber mixtures according to Claim 1 to produce tyres, in particular tyre treads.

## Revendications

1. Compositions de caoutchoucs, **caractérisées en ce qu'**elles contiennent de 0,3 à 15 parties en poids d'un composé d'addition et de polyaddition de 0,7 à 7 mol d'oxyde d'éthylène et/ou d'oxyde de propylène par mole de groupes hydroxy sur le néopentylglycol et/ou le triméthylolpropane, pour 100 parties en poids de la quantité totale de caoutchouc mise en oeuvre.

2. Compositions de caoutchoucs selon la revendication 1, **caractérisées en ce qu'**elles contiennent de 1 à 500 parties en poids de matières de charge et le cas échéant d'autres produits auxiliaires pour caoutchouc et/ou agents réticulants.

3. Compositions de caoutchoucs selon la revendication 1, **caractérisées en ce qu'**elles contiennent de 0,1 à 300 parties en poids de matières de charge minérales et/ou organiques pour 100 parties en poids de caoutchouc mises en oeuvre.

4. Compositions de caoutchoucs selon la revendication 1 et/ou revendication 3, **caractérisées en ce que** les matières de charge sont choisies dans le groupe des matières de charge des types oxydes, des types silicates, des noirs de carbone ou de leurs mélanges.

5. Compositions de caoutchoucs selon la revendication 3, **caractérisées en ce que** la matière de charge utilisée consiste en une ou plusieurs silices précipitées et/ou un ou plusieurs silicates précipités à une surface spécifique de 20 à 400 m²/g ou en un mélange de telles matières de charge.

6. Utilisation des compositions de caoutchoucs selon la revendication 1 pour la fabrication d'articles vulcanisés.

7. Utilisation des compositions de caoutchoucs selon la revendication 1 pour la fabrication de pneumatiques, en particulier de bandes de roulement de pneumatiques.
